# EUROPEAN PATENT APPLICATION

(11) **EP 4 610 912 A1**
(43) Date of publication of application: **03.09.2025**
(21) Application number: 24160910.6
(22) Date of filing: 01.03.2024
(51) Int. Cl.: G06Q 20/40, G06N 20/00

(54) **SIMPLIFICATION OF COMPLEX MODELLING**

(71) Applicant: Mastercard International Incorporated, Purchase, NY 10577 (US)
(72) Inventor: Flowerdew, Thomas, Filby, NR29 3HD (GB); Campbell, Brandon, Decatur, 30030 (US); Hall, James, San Anselmo, 94960 (US)
(74) Representative: Barker Brettell LLP

(57) **Abstract**

The present invention relates to a computer implemented method for training a simple machine learning model 210 to predict fraud. The method comprises obtaining a data set 120 comprising a plurality of data records 125, inputting the data set 120 into a complex machine learning model 110 to generate a fraud prediction score 140 for each of the data records 125, labelling the data records 125 as being indicative of fraudulent activity 150 or not being indicative of fraudulent activity 160 based on the fraud prediction score 140 generated for each respective data record 125, and training the simple machine learning model 210 on the labelled 150, 160 data records 125. The trained simple machine learning model 210 can then be used to predict fraudulent activity and determine if an alert 355 of the fraudulent activity is required The complex machine learning model 110 comprises a plurality of sub-models 113, 115, and the complexity of the complex machine learning model is due to this plurality of sub-models 113, 115. Whereas the simple machine learning model 210 comprises a single sub-model and is therefore substantially less complex than the complex machine learning model 110.

## Description

### Field

The present invention relates to methods and systems for training a simple machine learning model based on a complex machine learning model to predict fraud. In particular, the method and systems allow for a simple machine learning model that is less complex than a complex machine learning model to be trained to generate accurate fraud predictions based on the predictions of the complex machine learning model.

### Background

Transactional and financial fraud may be difficult to accurately predict. Payment network providers may utilise complex artificial intelligence (AI) in order to detect such fraudulent activity. Large amounts of data across many different aspects of the payment network may be analysed, increasing the complexity of the predictions. Indicators of fraudulent behaviour may also be hidden amongst all other financial activities. In order to accurately detect subtle signs of fraudulent behaviours within large amounts of data, the payment network may require highly complex machine learning models. The complex models may consist of multiple different sub-models, all working with different aspects of the payment network and different parameters in order to detect the subtle indicators of fraud.

However, issues may arise due to the complexity of the models required. The complexity of the models may affect any updating and tuning processes. As a complex model trained to detect subtle fraud may consist of multiple different models within it, updating such a model requires updating each of the individual models, before also updating the process in which they are combined to produce the final complex model. This increases the complexity of the updating processes, as well as the time and computer resources required to do so. Furthermore, running the model to generate predictions after training and validating may also require large amounts of computer resources due to the complexity required of such a model to accurately detect fraud.

The present invention sets out to alleviate these problems relating to the complexity of fraud detection models.

### Summary of Invention

According to a first aspect of the invention there is provided a computer implemented method for training a simple machine learning model to predict fraud, the method comprising: obtaining a data set comprising a plurality of data records, wherein each data record in the data set is associated with transactional activity of one or more accounts; inputting the data set into a complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models; labelling a plurality of the data records in the data set as being: indicative of fraudulent activity if the fraud prediction score generated for the respective data record is above a predetermined threshold, or not being indicative of fraudulent activity if the fraud prediction score generated for the respective data record is below the predetermined threshold; and training the simple machine learning model on the labelled data records, such that the trained simple machine learning model is configured to predict fraudulent activity based on the transactional activity of one or more accounts and determine if an alert of the predicted fraudulent activity is required, wherein the simple machine learning model comprises a single sub-model such that the simple machine learning model is substantially less complex than the complex machine learning model.

Advantageously, this provides a method in which a simple machine learning model that is substantially less complex than a complex machine learning model, can be trained using predictions from the complex machine learning model. To achieve this, the simple machine learning model is trained using the data records in the data set and fraud prediction scores of the data records in the data set generated by the complex machine learning model. The inputs of the simple machine learning model during training, can be the same data records input into the complex machine learning model and the labels related to each data record used are therefore based on the fraud prediction score that was predicted by the complex machine learning model. In this way, the simple machine learning model that includes only one sub-model, compared to the plurality of sub-models within the complex machine learning model, can be trained to provide the same, or similar, predictions as the more complex model, but as it is simpler it requires less computer resources to generate accurate fraud predictions and can be easier to update if future changes are required to the model.

Preferably, the training of the simple machine learning model further may comprise validating the trained simple machine learning model, wherein the validating comprises: generating an output of the trained simple machine learning model using a validation data set; generating an output of the complex machine learning model using the validation data set; determining a performance of the trained simple machine learning model by comparing the output of the trained simple machine learning model to the output of the complex machine learning model and if from said comparing it is determined that the output of the trained simple machine learning model is not within a desired range of the output of the complex machine learning model, the method further comprising: re-training the simple machine learning model with additional data records until the output of the trained simple machine learning model is within the desired range from the output of the complex machine learning model.

In this way, the trained simple machine learning model is validated such that it has sufficiently converged towards the complex machine learning model. The simple machine learning model is re-trained until its outputs are within a desired range of the outputs from the complex machine learning model. By validating the simple machine leaning model in this way, it is ensuring that the predictions generated by the simple machine learning model are the same as the predictions from the complex machine learning model. Therefore, the predictions of the simple machine learning model are accurate fraud predictions, based off of the predictions of the complex machine learning model, but without the complexity of the complex machine learning model.

The validation data set (i.e., input) into both the complex machine learning model and the trained simple machine learning model as part of the validating step may comprise a data record associated with transactional activity of one or more accounts similar to the inputs during training of the simple machine learning models. The data record used as input during the validating step may be a different data record to any of the data records stored within the data set used for training or it may be the same as one of the plurality of data records in the data set used for training. The output generated by the complex machine learning model may be a fraud prediction score relating to the input and is compared to the output of the simple machine learning model.

Alternatively, the validation data set input into both the complex machine learning model and the trained simple machine learning model as part of the validating step may comprise a plurality of data records where some may be the same as the data records in the data set used in training of the simple machine learning model or the plurality of data records used in the validating step may be different to the data records in the data set used in the training of the simple machine learning model.

Preferably, the method may further comprise: receiving a further data record associated with transactional activity of one or more accounts; inputting the further data record into the trained simple machine learning model so as determine if the further data record is indicative of fraudulent activity.

Advantageously, this provides a method of using the trained simple machine learning model to determine if a further data record is likely to be indicative of fraud. As the simple machine learning model has been trained based on the predictions of the complex machine learning model, the output of the simple machine learning model relating to the further data record is trained to be as accurate as the complex machine learning model for making a prediction for the same further data record.

The further data record may be associated with the same one or more accounts as the initial data set (i.e., that used to initially train the simple machine learning model), or the further data record may be associated with a one or more of a different plurality of accounts. Similarly, the transactional activity may be the same as the transactional activity in the data records used to initially train the simple machine learning model or it may be different transactional activity.

Preferably inputting the further data record into the trained simple machine learning model so as determine if the further data record is indicative of fraudulent activity may further comprise: inputting the further data record into the trained simple machine learning model to determine a fraud prediction score associated with the further data record; determining that the further data record is indicative of fraudulent activity if the fraud prediction score associated with the further data record is above the predetermined threshold.

In this way, the trained simple machine learning model generates a fraud prediction score which may be used to predict whether the further data record is associated with fraudulent activity. If the fraud prediction score associated with the further data record is above a predetermined threshold, the further data record is determined to be fraudulent activity. The predetermined threshold used with the trained simple machine learning model (to determine if the fraud prediction score associated with the further data record is indicative of fraudulent activity) may be different to the predetermined threshold used to label the data record with the complex machine learning model. The account associated with the further data record may be the same account associated with the initial data set (and data records) or it may be a different account of one of a plurality of accounts related to a payment network.

Preferably, the method may further comprise: alerting a user that the data record is indicative of fraudulent activity if the fraud prediction score associated with the further data record is above the predetermined threshold.

Advantageously this provides a way in which a user is alerted of data records (i.e., transactional activity of one or more accounts) that have been predicted by the trained simple machine learning model of being indicative of fraudulent activity. Therefore, the user, after receiving the alert, may take any necessary action in relation to the transactional activity of the data record that was found to be fraudulent. This may include any of: blocking the one or more accounts associated with the data record, alerting the holder(s) of the one or more accounts as to the detected fraudulent activity, and/or alerting authorities of the fraudulent activity.

Furthermore, since the simple machine learning model has been trained based on the predictions of the complex machine learning model, the alert to the user (as a result of the predictions from the simple machine learning model) is an alert based on whether the complex machine learning model would have predicted the further data record as being indictive of fraudulent activity or not. As the further fraud prediction score generated by the simple machine learning model is based on the labelled data determined by the fraud prediction score of the complex machine learning model, the predictions by the simple machine learning model, and subsequent alerting, will be accurate to the predictions that would have been generated by the complex machine learning model if it were used.

The user may be a payment network provider who has obtained the data set and further data record. Alternatively, it may be a user of the payment network, for example, financial institutions, merchants, and any other user of the payment network. The computer implemented method may be executed by the systems of the network provider, such as a payment network provider, and the data set including the plurality of data records may be obtained by the payment network provider. The data set may be one of a plurality of data sets stored by the payment network provider that are associated with transactional activity of one or more of a plurality of accounts. Further, the plurality of data records in the data set that are labelled by the complex machine learning model may comprise all of the data records in the data set or some of the data records in the data set.

Preferably, each of the plurality of data records and the further data record may comprise a plurality of data features, and wherein each of the plurality of data records and the further data record comprise one or more of the same data features.

In this way, each of the data records input into the trained simple machine learning model include one or more of the same data features that were input into the complex machine learning model used to generate the labels (and that were then used to train the simple machine learning model). This may ensure consistency between the output of the complex machine learning model, the training of the simple machine learning model and using the trained simple machine learning model to generate predictions such that the trained simple machine learning model produces substantially the same predictions as the complex machine learning model would have produced.

The data features of a data record are different aspects or attributes of that data record. Therefore, in the data set that consist of a plurality of data records, the data records will each contain different features. The data features may be different aspects of the transactional activity of each data record. The transactional activity that is monitored and may therefore constitute the data features of the data records may be credit card usage, ATM usage, insurance/cash disbursement, gambling, transactions of a high value, purchasing and/or selling luxury goods. Therefore, it may be any of the above data features (i.e., transactional activities) that are found to indicate fraudulent activity such as money laundering by the trained simple machine learning model.

Preferably, the fraud (i.e. fraudulent activity) may be money laundering. Alternatively, the fraudulent activity may be any other type of fraud, including security threats, identity theft, phishing attacks, credit/debit card fraud, and/or insurance fraud.

Preferably, the plurality of sub-models of the complex machine learning model may comprise a first sub-model of a first model type and a second sub-model of a second model type, wherein the first model type and second model type are different.

In this way, the complex machine learning model is complex as it comprises a plurality of different sub-models that are of a different model type. The complexity of the complex machine learning model by utilising different sub-models of different model types means that it is able to produce accurate predictions of fraudulent activity, where the indicators of such fraudulent activity are difficult to detect. However, as the simple model is trained on the complex model the simple model can provide predictions that are as accurate as the complex model without requiring multiple different sub-models.

Preferably, the first model type may be an unsupervised machine learning model and the second model type may be a supervised machine learning model.

Having a first and second sub-model that are supervised and unsupervised, respectively, also adds to the complexity of the complex machine learning model. These two model types may produce substantially different types of outputs.

Preferably, the complex machine learning model may generate the fraud prediction score through combining of a plurality of outputs from each of the plurality of sub-models that form the complex machine learning model.

Each of the sub-models that make up the complex machine learning model generate different outputs. For example, the unsupervised model may be a clustering model and it may assign the data record to a cluster and a weight as an output, and the supervised model may be a supervised learning trained neural network model using a multilayer perceptron algorithm and it may generate a prediction score as an output. Therefore, the different outputs may be combined to produce a final prediction score. This combining of the outputs may also add to the complexity of the complex machine learning model as this is more complex than the use of a single model to generate a single final prediction score.

The combination of the different model scores within the complex machine learning model may also comprise a complex weighting scheme of the different outputs, such that the extent of which the different outputs contribute to the final prediction score differs. In this way, the complexity of the complex machine learning model may also refer to this weighted calculation for combining the different outputs from the different sub-models of different model types.

Preferably, the single sub-model of the simple machine learning model may be a supervised model.

Advantageously, a single supervised model that generates a prediction score is simpler than the complex machine learning model that comprises unsupervised and supervised sub-models producing different outputs that have to combined in order to generate a prediction score. In this way, performing updates on the simple machine learning model is easier than on the complex machine learning model. An update of the simple machine learning model will require less computer resources and time compared to the complex machine learning model, as the complex machine learning model will require additional time to update each of the individual models and further additional time to update the combining process of the individual model scores. Furthermore, the simple machine learning model comprising only a single supervised sub-model is easier to monitor due to its simplicity compared to the complex machine learning model comprising a plurality of unsupervised and supervised sub-models.

Preferably, the supervised learning model of the simple machine learning model, may be a random forest algorithm.

The single supervised sub-model that makes up the simple machine learning model may be a random forest algorithm. In this way the simple machine learning model comprising a single random forest algorithm is less complex than the complex machine learning algorithm that comprises a plurality of sub-models.

The supervised learning model of the simple machine learning model may instead be a regularised logistic regression algorithm and/or an extreme gradient boosting (XGBoost) model.

Preferably, a number of trees and a depth of the number of trees of the random forest algorithm may be limited.

In this way, the random forest algorithm of the simple machine learning is limited to a predetermined number of trees and each tree is limited to a predetermined depth (the maximum length a random path can be from an initial node to a final node of the tree). The simplicity of the simple machine learning model may therefore be due to the limited depth and number of trees of the random forest algorithm. Advantageously, prevents the simple machine learning model from becoming too complex, by preventing the depth of a random path from being allowed to develop between an unlimited number of nodes, within an unlimited number of trees.

A small depth of a random path between nodes within a small number of trees is simpler and requires less computer resources to use in predictions than a larger depth of random paths between the nodes of any number of trees, as with each additional step added to the random path (increasing the depth by 1) the number of possible paths from each node to the next increases exponentially until the random forest comprises an exponential number of nodes and paths. A random forest algorithm without a limited number of trees and a limited depth of each tree would be considered far more complex and would require a large amount of time and computer resources to generate predictions, compared to a random forest algorithm that has a limited number of trees and depth. The number of trees of the random forest algorithm of the simple machine learning model may, for example, be limited to 8, 16, 32, 64, 128. The depth of the random forest algorithm of the simple machine learning model may, for example, be limited to 2, 4, 8, 16, 32.

Furthermore, in restricting the number of trees and the depth of each tree of the random forest algorithm, performing updates, and monitoring the simple machine learning model is also easier than updating and monitoring the complex machine learning model, as there are fewer aspects and parameters to the limited number of trees and depth of random forest algorithm, compared to the complex machine learning model that comprises a plurality of different models of different types.

The random forest algorithm may comprise of a plurality of trees. The plurality of trees of the random forest algorithm may comprise a plurality nodes in which random paths may form from node to node. The depth of the random forest algorithm is a length of a random path between a first node (where the random path starts) and a last node (where the random path ends) of the plurality of nodes within each of the plurality of trees.

Preferably, the method may further comprise: obtaining a data record from a user, wherein the data record from the user was determined by the user to be indicative of fraudulent activity; generating an output using the data record from the user as input into the trained simple machine learning model; and updating the trained simple machine learning model such that from the output generated by the data record from the user it is determined that said the data record is indicative of fraudulent activity.

Advantageously, the trained simple machine learning model can also be updated using a data record found by the user to be associated with fraudulent activity. Alternatively, the data record may be found by the user to be likely associated with fraudulent activity, rather than directly proven to be associated with fraud. The user can identify fraudulent activity that has occurred and a data record of the transactional activity that was associated with the fraud can be labelled as such and input into the trained simple machine learning model. This incorporates user feedback into the trained simple machine learning model. In this way, the simple machine learning model can produce more accurate predictions based on real-world data and may be tailored for specific uses by the user, as it can be trained to identify transactional behaviour that the user has found to be a common indicator of fraud.

This incorporation of user data records and labels may occur during updates of the trained simple machine learning model. In this way the simple machine learning model may be updated and tuned to better identify certain transactional activity as fraudulent based on the feedback from the user. Updating the simple machine learning model using additional inputs from the user is far simpler and requires less computer resources than doing the same with the complex machine learning model. This is due to each of the sub-models that form the complex machine learning model having to be updated and re-trained individually before their outputs can be combined, in order to utilize the data record and label from the user feedback. This will require a significantly large amount of time and computer resources compared to the updating of the single supervised model of the simple machine learning model.

The user that provides the data record may be the same user that is alerted of fraudulent activity based on the further data record, or they may be a different user. It may also be one or more users that provide data for the updating process, and they may provide one or more data records. The updating of the trained simple machine learning model may be changing or updating the parameters of the model. For example, where the trained simple machine learning model is a random forest algorithm, the updating may include updating the parameters of the random forest algorithm, for example, the number of decision trees in the random forest, the depth of each tree, the maximum number of features, the minimum sample size, and any other parameter of the random forest algorithm that may be relevant.

The updating of the trained simple machine learning model may also comprise re-training the trained simple machine learning model. The re-training may comprise inputting the data record from the user into the trained simple machine learning model labelled as being indicative of fraud, such that the simple machine learning model has now been further trained by using the data record and label provided by the user.

The updating may also comprise updating the trained simple machine learning model such that a fraud prediction score generated by the input of the data record from the user into the updated trained simple machine learning model is above the predetermined threshold (meaning the fraud prediction score is high enough i.e., above the threshold to indicate that the data record from the user is indicative of fraudulent activity or is likely to be indictive of fraudulent activity).

In this way, the trained simple machine learning model may be updated such that the additional data record provided by the user (in which the user knows to be fraudulent), when input into the trained simple machine learning model, generates a fraud prediction score that is above the predetermined threshold to show that the data record is indicative of fraudulent activity. Therefore, the trained simple machine learning model can be easily updated to better predict similar data records, to that provided by the user, as being indicative of fraudulent activity. This is easier than updating the complex machine learning model to do the same, as the complex machine learning model, as discussed above, is more complex and will require more time and computer resources to perform similar updates.

In some arrangements, the predetermined threshold used to determine if the additional data record is indicative of fraudulent activity may be the same predetermined threshold as the threshold used to determine if the further data record is indicative of fraudulent activity, it may be the same as the threshold used to determine if the data record input into the complex machine learning model is indicative of fraud, or it may be a different predetermined threshold.

According to a further aspect of the invention, there is provided a system for training a simple machine learning model to predict fraud, the system configured to: obtain a data set comprising a plurality of data records, wherein each data record in the data set is associated with transactional activity of one or more accounts; input the data set into a complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models; label a plurality of the data records in the data set as being: indicative of fraudulent activity if the fraud prediction score generated for the respective data record is above a predetermined threshold, or not being indicative of fraudulent activity if the fraud prediction score generated for the respective data record is below the predetermined threshold; and train the simple machine learning model on the labelled data records, such that the trained simple machine learning model is configured to predict fraudulent activity based on the transactional activity of one or more accounts and determine if an alert of the predicted fraudulent activity is required, wherein the simple machine learning model comprises a single sub-model such that the simple machine learning model is substantially less complex than the complex machine learning model.

The system may be configured to perform any of the above-mentioned method steps according to the above aspects of the invention.

According to a further aspect of the invention, there is provided a non-transitory computer-readable medium comprising instructions which, when executed by a computer, cause the computer to: obtain a data set comprising a plurality of data records, wherein each data record in the data set is associated with transactional activity of one or more accounts; input the data set into a complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models; label a plurality of the data records in the data set as being: indicative of fraudulent activity if the fraud prediction score generated for the respective data record is above a predetermined threshold, or not being indicative of fraudulent activity if the fraud prediction score generated for the respective data record is below the predetermined threshold; and train the simple machine learning model on the labelled data records, such that the trained simple machine learning model is configured to predict fraudulent activity based on the transactional activity of one or more accounts and determine if an alert of the predicted fraudulent activity is required, wherein the simple machine learning model comprises a single sub-model such that the simple machine learning model is substantially less complex than the complex machine learning model.

The non-transitory computer-readable medium may comprise instructions which, when executed by a computer, cause the computer to perform any of the above-mentioned method steps according to the above aspects of the invention.

According to a further aspect of the invention, there is provided a computer program product comprising instructions which, when executed by a computer, cause the computer to obtain a data set comprising a plurality of data records, wherein each data record in the data set is associated with transactional activity of one or more accounts; input the data set into a complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models; label a plurality of the data records in the data set as being: indicative of fraudulent activity if the fraud prediction score generated for the respective data record is above a predetermined threshold, or not being indicative of fraudulent activity if the fraud prediction score generated for the respective data record is below the predetermined threshold; and train the simple machine learning model on the labelled data records, such that the trained simple machine learning model is configured to predict fraudulent activity based on the transactional activity of one or more accounts and determine if an alert of the predicted fraudulent activity is required, wherein the simple machine learning model comprises a single sub-model such that the simple machine learning model is substantially less complex than the complex machine learning model.

The computer program product may comprise instructions which, when executed by a computer, cause the computer to perform any of the above-mentioned method steps according to the above aspects of the invention.

### Description of Figures

Figure 1 shows a schematic block diagram of a system for predicting fraudulent activity using a complex machine learning model, according to an aspect of the present invention;
Figure 2 shows a schematic block diagram of a system for training a simple machine learning model to predict fraud, according to an aspect of the present invention;
Figure 3 shows a schematic block diagram of a system for using a simple machine learning model trained to predict fraud, according to an aspect of the present invention;
Figure 4 shows a flow diagram of a computer implemented method for training a simple machine learning model to predict fraud, according to an aspect of the present invention; and
Figure 5 shows a data processing device, according to aspects of the present invention.

### Detailed Description

The present disclosure relates to methods and systems for training a simple machine learning model to predict fraud. Predicting transactional or financial fraudulent activity can be difficult, and highly complex machine learning models may traditionally be required. The complexity of these machine learning models may introduce problems, such as the amount of computer resources required to run and update the models. The more complex the machine learning model is, the more difficult it becomes to run, monitor, update and the longer the update may take. Therefore, a simpler machine learning model that still generates predictions with the same level of accuracy, or almost the same level of accuracy, as the complex machine learning model is required.

The present disclosure sets out a system and method that trains and validates a simple machine learning model based on the predictions of a complex machine learning model. Data records are input into the complex machine learning model such that each of the data records can be labelled as being indicative of fraudulent activity or not indicative of fraudulent activity based on the outputs of the complex machine learning model. The simple machine learning model is then trained using the same data records and labels, such that the simple machine learning model can generate substantially the same predictions as the complex machine learning model, whilst being a less complex machine learning model to operate and update if needed to in the future.

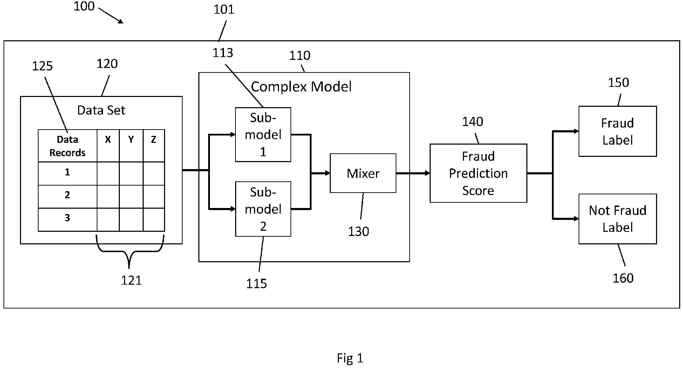

Figure 1 shows a schematic block diagram of system 100 for predicting fraudulent activity using a complex machine learning model 110, in accordance with an aspect of the present invention. The system 100 is maintained and executed by the server 101 of a payment network provider. A data set 120 may be obtained by the payment network provider server 101, such as through monitoring transactions, or received via a third party. The data set 120 is stored in memory of said server 101. The data set 120 consists of a plurality of data records 125, where each of the data records 125 include one or more data features 121. Each data feature 121 in each of the data records 125 is associated with transactional activity of one or more accounts. The one or more accounts in which the data records 125 relate, are accounts associated with the payment network provider. In alternative arrangements, one or more of the accounts may not be associated with the payment network provider.

The data features 121 of the data records 125 are different aspects or attributes of each of the data points 125. Examples of the data features 121 that may be included in the plurality of data records 125 within data set 120 are shown in Table 1.

**Table 1**

| **Feature** | **Description** |
|---|---|
| hv_tot_usd_56d | High Value Transaction (USD) |
| Uhv_tot_usd_56d | Ultra-High Transaction Value (USD) |
| Atm_usd_15m_1h | Transaction using ATM (USD) |
| refund_app_usd_56d | Refund Total (USD) |
| xbr_rsk_usd_56d | Transaction in High Risk Country (USD) |
| pos_cnt_28d_56d | PCS (Point-of-Sale) Transaction |
| mcc_g1_tot_56d | Merchant Category Code |

The features of data records 125 are not limited to those shown in Table 1 and may be any other data feature that may be relevant to the transactional activity of the one or more accounts. For example, the transactional activity of the one or more accounts includes a number of transactions, value of each transaction, whether the transaction is of high value or ultra-high value, currency, number of refunds, total amounting from refunds, geographical location of the sending/receiving account in the transaction, credit card usage, ATM usage, POS (Point-of-Sale) transactions, insurance/cash disbursement, category of a merchant involved in the transaction, gambling, purchases or selling of luxury goods and any other transactional activity that may be relevant. The data features 121 may also be features derived from the transactional activities listed above, such as a relevant combination of features combined together into a single derived feature.

The data records 125 are input into the complex machine learning model 110. The complex machine learning model 110 has been developed in order to detect various transactional activities that may be indicative of fraudulent activity. An example of the fraudulent activity that may be detected amongst the transactional activity stored within the data set 120 is money laundering. Other types of fraudulent activity, such as network security threats, identity theft, phishing attacks, credit/debit card fraud, insurance fraud, may also be predicted by the complex machine learning model 110.

The complex machine learning model 110 consist of a plurality of sub-models 113, 115. As shown in Figure 1, the complex machine learning model 110 includes two sub-models, first sub-model 113 and second sub-model 115. However, the complex machine learning model 110 may include any number of additional sub-models to those shown in Figure 1. Each of the sub-models 113, 115 are associated with different aspects of the payment network to each other, for example, either a credit card network, debit card network, ATM network, real time-payment network or any other network maintained by the payment network provider.

The first and second sub-models 113,115 are different types of machine learning models. The sub-model 113 is of a first model type and the sub-model 115 is of a second model type. The first model type is an unsupervised machine learning model and the second model type is a supervised machine learning model. The unsupervised model type is a clustering model, and the supervised model type is a trained neural network model using a multilayer perceptron algorithm. In this way, the complex machine learning model 110 consists of a first sub-model 113 that is an unsupervised machine learning model and a second sub-model 115 that is a supervised machine learning model. The different type of sub-models 113, 115 (supervised and unsupervised) are used as each sub-model 113, 115 predicts fraudulent activity within different aspects of the payment network, and therefore have been designed to optimally predict fraud associated with that aspect of the payment network. Alternatively, the sub-models 113, 115 may be associated with the same aspect of the payment network, and in this arrangement, the combination of their different designs (supervised and unsupervised) within one complex machine learning model 110 provides greater accuracy to complex and difficult predictions.

The inputting of the data records 125 of the data set 120 into the complex machine learning model 110 consists of inputting the data records 125 into each of the plurality of sub-models 113, 115 of the complex machine learning model 110. Therefore, each of the plurality of sub-models 113, 115 will generate an output for each data record 125. However, the type of outputs produced by the plurality of sub-models 113, 115 will vary, as the plurality of sub-models 113, 115 are of different model types (supervised and unsupervised for instance). Therefore, in order to obtain a final fraud prediction score 140 from the complex machine learning model 110, the plurality of outputs produced by each of the plurality of sub-models 113, 115 are combined using a mixer 130.

The unsupervised sub-model (in this instance the first sub-model 113) is a clustering model and it will assign an input data record 125 to a weighted cluster as an output. The supervised sub-model (in this instance the second sub-model 115) is a supervised learning trained neural network model using a multilayer perceptron algorithm that will output a prediction sore. The supervised and unsupervised sub-models 113, 115 may also be any other type of supervised or unsupervised machine learning model.

It can be seen that each of the plurality of sub-models 113, 115 vary with respect to the type of their outputs. Therefore, in order for the complex machine learning model 110 to generate a final fraud prediction score 140 the different outputs are combined. The complex machine learning model 110 includes the mixer 130, which applies one or more calculations to each of the outputs produced by the plurality of sub-models 113, 115 such that the outputs are combined. The one or more calculations applied by the mixer 130 will depend on the type of outputs generated by the plurality of sub-models 113, 115. In the case of a weighted cluster as one output and a prediction score as another output, the mixer 130 will apply one or more calculations to determine a raw score, in which it applies a sigmoid function to the raw score to produce the final fraud prediction score 140. The one or more calculations used by the mixer 130 to combine the different outputs may be any type of calculation capable of generating the fraud prediction score 140.

Once the complex machine learning model 110 has determined a fraud prediction score 140 for a data record 125 (along with a fraud prediction 140 score for any of the other data records 125 in the data set 120), the system 100 will determine whether the data record 125 is indicative of fraudulent activity. The system 100 sets a predetermined threshold such that any fraud prediction score 140 that is above the predetermined threshold labels the data record 125 input into the complex machine learning model 110 to generate that fraud prediction score 140 as being indicative of fraudulent activity 150. In the same way, a fraud prediction score 140 that is below the predetermined threshold labels the data record 125 input into the complex machine learning model 110 to generate that fraud prediction score 140 as not being indicative of fraudulent activity 160. In this case, the lower the fraud prediction score 140 the likelihood of the data record 125 being indicative of fraudulent activity is low, whereas a higher fraud prediction score 140 represents a higher likelihood of the data record 125 being indicative of fraudulent activity. The predetermined threshold and labels 150, 160 have been set accordingly.

Therefore, the system 100, including the complex machine learning model 110, has predicted whether each of a plurality of data records 125 corresponding to transactional activity in the data set 120 is indicative, or not indicative, of fraudulent activity, and has labelled each of the plurality of data records 125 as such 150, 160.

The fraudulent activity within the transactional activity of the data set 120 may be difficult to predict. The difference in the data records 125 within the data set 120 that are associated with fraudulent activity may be subtle compared to the rest of the data records 125 within the data set 120 that are not associated with fraudulent activity. Therefore, typically complex machine learning models are used to detect the subtle indicators of fraud, such as complex machine learning model 110. The complex machine learning model 110 is complex due to its plurality of sub-models 113, 115. Further complexity is added to the complex machine learning model 110 due to the first sub-model 113 and second sub-model 115 being of different model types, and that the different outputs generated by the plurality of different sub-models 113, 115 are combined using one or more calculations to generate the final fraud prediction score 140.

Problems may occur due to the complexity of the complex machine learning model 110 after training, such as the time and computer resources that is required to run the model and perform any updating or tuning processes. Therefore, a trained machine learning model that is simpler than the complex machine learning model 110 but can predict fraudulent activity with the same level of accuracy as the complex machine learning model 110 is needed.

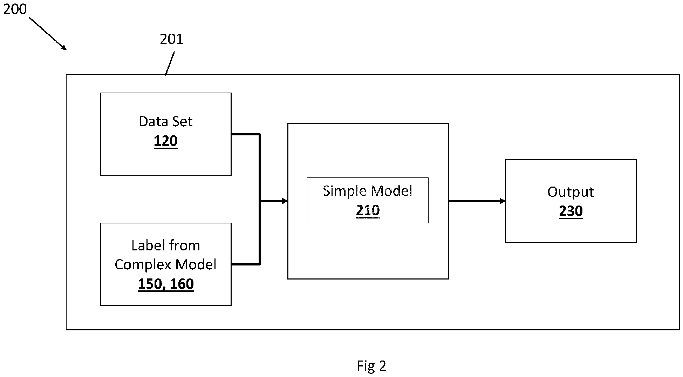

Figure 2 shows a schematic block diagram of system 200 of the payment network provider for training a simple machine learning model to predict fraud. The system comprises server 201 which is the same as server 101. The system 200 comprises simple machine learning model 210, that according to aspects of the invention, is trained based on the predictions made by the more complex, complex machine learning model 110 shown in Figure 1.

The training of the simple machine learning model 210 includes inputting the data set 120 that was input into the complex machine learning model 110, as described in relation to Figure 1. Therefore, the data used to train the simple machine learning model 210 is the same as the data set 120 comprising the plurality of data records 125, where each data record 125 is associated with transactional activity of one or more accounts.

Therefore, the transactional activity of the one or more accounts input into the simple machine learning model 210 as the data set 120, are the same as for the complex machine learning model 110. This includes for example, number of transactions, value of each transaction, currency, geographical location of the sending/receiving account in the transaction, credit card usage, ATM usage, insurance/cash disbursement, gambling, purchases or selling of luxury goods and any other transactional activity that may be relevant.

Also input into the simple machine learning model 210 during training are the labels 150, 160 determined by the system 100 that includes the complex machine learning model 110. Each data record 125 of the data set 120 that is input into the simple machine learning model 210 is accompanied by its respective label 150, 160 that was determined based on the fraud prediction score 140 generated by the complex machine learning model 110 for said data record 125, as shown in Figure 1.

In some arrangements, the input of the data set 120 into the simple machine learning model 210 includes an additional step of dividing the data records 125 into two groups before inputting them into the simple machine learning model 210. The two groups of data records 125 consists of a group of data records 125 associated with transactional activity relating to payment cards such as credit or debit cards, and the other groups is for data records 125 associated with transactional activity relating to other forms of transactions such as account to account transfers. In this way, fraudulent activity predictions made by the simple machine learning model 210 after inputting the data records 125 in two separate groups, may be split into two different types, those which indicate fraudulent activity associated with payment cards and those which indicate fraudulent activity associated with other forms of transactions.

An output 230 is generated by the simple machine learning model 210. The output 230 of the simple machine learning model 210 is a simple indication of whether the data record 125 that was input would have been predicted by the complex machine learning model 110 as being indicative of fraudulent activity or not. For example, similar to the final output of the complex machine learning model 110, the output 230 may also be a fraud prediction score, that when a predetermined threshold is set, may indicate fraud depending on whether this fraud prediction score is above or below the predetermined threshold.

In this way, the simple machine learning model 210 is trained to predict the same fraudulent activity as the complex machine learning model 120. The fraudulent activity predicted by the simple machine learning model 210 may therefore be, for example, money laundering, network security threats, identity theft, phishing attacks, credit/debit card fraud, insurance fraud or any other types of fraudulent activity that can be predicted by the complex machine learning model 110.

The complex machine learning model 110 may have been developed to produce accurate fraud predictions based on subtle indicators within large amounts of data, that the simple machine learning model 210 on its own may not be able to accurately predict. Therefore, the simple machine learning model 210 is trained based on the complex machine learning model 110 such that it produces predictions of the same or similar quality and to the same or similar accuracy as the predictions generated by the complex machine learning model 110.

The trained simple machine learning model 210 is then validated. This is achieved by comparing an output 230 of the trained simple machine learning model 210 with an output of the complex machine learning model 110, where both outputs have been generated by the same input. The input is one or more data records associated with transactional activity of one or more accounts. The one or more data records used for the validating step are included in a validation data set. The data record(s) used in the validation data set may be different to any of the data records 125 stored within the data set 120 or the one or more data records may be the same as one or more of the plurality of data records 125 in the data set 120. The one or more data records used in the validation data set are input into the complex machine learning model 110 such that labels 150, 160 for each of the data records are generated indicating if each of the data records are indicative or not of fraudulent behaviour.

In the case where the output 230 of the simple machine learning model 210 is an indication as to whether the input is indicative or not of fraudulent activity, the output 230 of the simple machine learning model 210 is compared to the label 150 or 160 determined by the fraud prediction score 140 generated by the complex machine learning model 110 input with the same data record. In the case where the output 230 is a fraud prediction score generated by the simple machine learning model 210 during the validating process, this fraud prediction score is compared to the fraud prediction score 140 determined by the complex machine learning model 110 input with the same data record.

A difference is then determined between the output 230 from the simple machine learning model 210 and the output of the complex machine learning model 110 both generated by the same input. If the difference is below a desired threshold, i.e., the output 230 from the simple machine learning model 210 is not within a desired range of the output from the complex machine learning model 110, the simple machine learning model 210 is re-trained. The simple machine learning model 210 is re-trained using a plurality of additional data records and labels, where the labels have been determined by the fraud prediction score generated by the complex machine learning model 110 for each of the additional data records.

The simple machine learning model 210 is re-trained until the output 230 generated by the simple machine learning model 210 is within a desired range of the output generated by the complex machine learning model 110. Therefore, once the outputs are within a desired range from one another the simple machine learning model 210 has been sufficiently validated and has sufficiently converged towards the complex machine learning model 110. In this way, the predictions made by the simple machine learning model 210 are accurate to the predictions made by the complex machine learning model 110.

The simple machine learning model 210, after using data records labelled 150, 160 by the fraud prediction score 140 (which is produced by the complex machine learning model 110) as input, will therefore be trained and validated to accurately predict the same transactional activity as being indicative of fraud, as the complex machine learning model 110 would have predicted as being indicative of fraud. However, the simple machine learning model 210 is less complex than the complex machine learning model 110.

As discussed in relation to Figure 1, there are many different factors that contribute to the complexity of the complex machine learning model 110. These include the fact that the complex machine learning model 110 consists of a plurality of sub-models 113, 115. It may also be that the plurality of sub-models 113, 115 are of different model types that generate different types of outputs, and that the outputs of each of the plurality of sub-models 113, 115 of different model types are combined to produce the fraud prediction score 140. None of the factors that contribute to the complexity of the complex machine learning model 110 are present in the simple machine learning model 210. In this way, the simple machine learning model 210 is simpler than the complex machine learning model 110 (or the complex machine learning 110 model is more complex than the simple machine learning model 210).

The simple machine learning model 210 consists of only one sub-model. The one sub-model of the simple machine learning model 210 is of a single model type. The single model type is a supervised machine learning model, namely, a random forest algorithm. The simple machine learning model 210 is therefore only one, supervised machine learning model, compared to the complex machine learning 110 model that comprises a plurality of sub-models 113, 115, that can also be of different model types. Therefore, due to the simple machine learning model 210 being only one machine learning model (a single sub-model) that is of a single model type (supervised), it is less complex than the complex machine learning model 110.

Furthermore, since the simple machine learning model 210 is one supervised machine learning model, there is only a single output 230 compared to the plurality of outputs of the plurality of sub-models 113, 115 in the complex machine learning model 110 that must be combined with the mixer. Therefore, a further complexity of the complex machine learning model 110 over the simple machine learning model 210 is that the different outputs generated by each of the plurality of sub-models 113, 115 are combined. This additional step of combining the different types of outputs and calculating the final fraud prediction score 140 is removed by the use of the simple machine learning model 210. The simple machine learning model 210, as it is a single supervised model, generates one output 230 that indicates whether the data record 125 input is indicative or not indicative of fraudulent activity. Therefore, using the simple machine learning model 210 to predict fraudulent activity is substantially simplified compared to the complex machine learning model 110 in this way.

The simple machine learning model 210 may also simplified further by limiting the complexity of the random forest algorithm that makes up the single sub-model. This is achieved by limiting the number of trees of the random forest algorithm and the depth of each tree. The depth of a random forest algorithm tree is the maximum length a random path can be from an initial node to a final node of the tree. The number of trees may be regarded as the number of initial nodes in which the random paths develop from. Limiting the depth and number of trees limits the complexity of the simple machine learning model 210, as with each additional tree and additional step added to the random path (increasing the depth by 1) the number of possible paths from each node to the next increases exponentially until the random forest comprises an exponential number of nodes and paths. Therefore, in order to keep the simple machine learning model 210 simple, the depth and number of trees of the random forest algorithm is limited. The number of trees of the random forest algorithm of the simple machine learning model may, for example, be limited to 8, 16, 32, 64, 128. The depth of the random forest algorithm of the simple machine learning model may, for example, be limited to 2, 4, 8, 16, 32.

The simple machine learning model 210 that is trained based on the complex machine learning model 110, therefore provides an advantage over the complex machine learning model 110. The simple machine learning model 210, due to its simplicity compared to the complex machine learning model 110, requires less computer resources and time to run the model, whilst maintaining the accuracy of the predictions.

In fact, after conducting trails of a simple machine learning model trained and validated according to aspects of the present invention, it was found that 77% of all data records relating to payment card transactional activity found to be fraudulent by a complex machine learning model, were also determined to be indicative of fraudulent activity by the simple machine learning model. Similarly, 90% of all data records relating to other forms of transactional activity e.g., account to account transfers found by the complex machine learning model to be fraudulent, were also determined by the trained simple machine learning model to be indicative of fraudulent activity. Therefore, the predictions of the simple machine learning model are accurate to those of the complex machine learning model.

The simplicity of the simple machine learning model 210 also allows the model, after training, to be updated using less computer resources and time compared to the complex machine learning model 210. The trained simple machine learning model 210 is updated after training to ensure accuracy of the predictions as transactional and fraudulent activities change. This is achieved by incorporating feedback from a user into the simple machine learning model 210. The user, such as a financial institution or a merchant, may store one or more data records that they have determined to be fraudulent activity or that they have determined to likely be fraudulent activity. The user may have a good understanding as to which types of transactional activities have a high likelihood of being indicative of fraudulent activity. Therefore, the trained simple machine learning model 210 is updated based on the one or more data records provided by the user to be indicative of fraudulent activity.

The trained simple machine learning model 210 is updated such that an input of the one or more data records provided by the user generates an output indicating that the one or more data records are indicative of fraudulent activity. In this way, the one or more data records provided by the user are incorporated into the trained simple machine learning model 210, such that the model can better identify certain transactional activity as fraudulent based on feedback from the user.

The updating of the trained simple machine learning model 210, such that the one or more data records provided by the user are determined to be indicative of fraudulent activity, consist of changing or updating the parameters of the random forest algorithm of the simple machine learning model 210, for example, the number of decision trees in the random forest, the depth of each tree, the maximum number of features, the minimum sample size, and any other parameter of the random forest algorithm that may be relevant.

Therefore, the simple machine learning model 210 may be updated to produce more accurate predictions based on real-world data (such as the one or more data records from the user) and is tailored for specific uses by the user, as it has been updated to identify transactional behaviour that the user has found to be a common indicator of fraud.

Updating the trained simple machine learning model 210 using the one or more data records from the user is simpler and requires less computer resources than doing the same with the complex machine learning model 110. Updating the complex machine learning model 110 to incorporate the user feedback in the same way as for the simple machine learning model 210, requires updating each of the sub-models 113, 115 that form the complex machine learning model 110 individually before updating the mixer 130 such that the way in which the different types of outputs generated by each of the sub-models 113, 115 are combined are also be updated. This will require a significantly larger amount of time and computer resources compared to the updating of the single supervised model of the trained simple machine learning model 210.

The trained simple machine learning model 210 further simplifies a monitoring process compared to the complex machine learning model 110. For the same reasons listed above as to why the complex machine learning model 110 is more complex than the simple machine learning model 210, such as the plurality of sub-models 113, 115 within the complex machine learning model 110, it is easier, quicker and uses less computer resources to monitor the single supervised model of the simple machine learning model 210. The monitoring of the trained simple machine learning model 210 comprises, for example, detecting any issues that may occur, ensuring the models performance remains consistent and accurate, monitoring the effect of each update of the model on its performance.

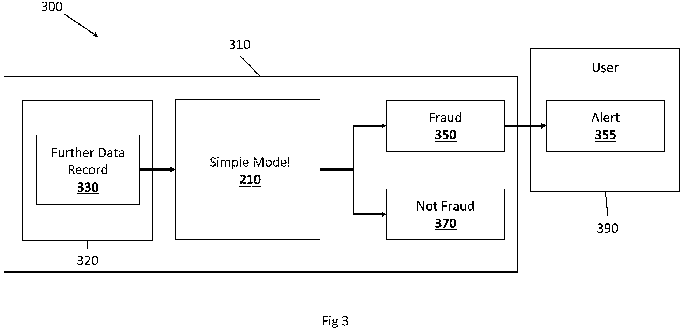

Figure 3 shows a schematic block diagram of a system 300 for using the simple machine learning model 210 trained to predict fraud, according to an aspect of the present invention. The system 300 includes a server 310 of the payment network provider that includes the simple machine learning model 210 shown in Figure 2, and a user's server 390. The user server 390 is the same user that provided the data records for the updating of the trained simple machine learning model 210 described previously. Alternatively, the user 390 may be a different user. The user 390 may be any user of the payment network provider server 310, such as a merchant or financial institution, or the user 390 may be the payment network provider itself.

The simple machine learning model 210, after being trained, is used to predict whether an input 320 is indicative of fraudulent activity. The input 320 is a further data record 330 of transactional activity relating to one or more accounts obtained by the payment network provider and includes a plurality of data features, some of which may be the same as the data features 121 of the plurality of data records 125 stored in the data set 120 shown in Figures 1 and 2. The further data record 330 is associated with the user 390, or it may be associated with one or more different users of the payment network. The further data record 330 may be provided by the users 390 or it may be obtained by the payment network provider through monitoring transactional activity across different aspects of the payment network.

Similar to the system 200 shown in Figure 2, the further data record 330 is input into the simple machine learning model 210 to generate an output of whether the further data 330 record is indicative of fraudulent behaviour 350 or whether it is not indicative of fraudulent activity 370.

As discussed above in relation to Figure 2, the output of the simple machine learning model 210 may be a fraud prediction score or it may be an indication of whether the further data record 330 is fraudulent or not fraudulent. If the output generated by the further data record 330 is the fraud prediction score, a predetermined threshold will be applied to the fraud prediction score associated with the further data record 330 such that the further data record 330 is labelled as indicative of fraud 350 if this fraud prediction score is above the predetermined threshold or labelled as not being indicative of fraud 270 if this fraud prediction score is below the predetermined threshold.

Since the simple machine learning model 210 was trained based on the complex machine learning model 110, the output 350 or 370 generated by the simple machine learning model 210 would be the same, or similar, as an output generated by the complex machine learning model 110 if the further data record 330 had been input into the complex machine learning model 110. In this way the predictions 350, 370 generated by the simple machine learning model 210 can be viewed as predictions of whether the complex machine learning model 110 would have predicted the input 320 (such as the further data record 330) to be transactional activity that is indicative of fraudulent activity.

After generating the predictions 350, 370 by using the simple machine learning model 210, the payment network provider 310 proceeds to alert the user 390 of the payment network associated with the further data record 330 if the further data record 330 was predicted to be indicative of fraudulent activity 350. In this way the user 390is alerted to transactional activity (the further data record 330) that has been predicted by the simple machine learning model 210 to be indicative of fraud.

The alert 355 may be an alert sent to the user' server 390 and displayed on a screen of a device associated with the server, the alert 355 may be that the further data record 330 that has caused the alert 355 to be made is stored by the network provider or sent to the user server 390, or the alert 355 may be any method or system in place such that the user server 390 can be alerted to the potential fraudulent activity that was detected by the simple machine learning model 210.

After receiving the alert 355 the user server 390 may then proceed to take any necessary action based on the alert 355. The action may include blocking the one or more accounts associated with the further data record 330, alerting the holder(s) of the one or more accounts associated with the further data record 330 as to the detected fraudulent activity, alerting authorities of the fraudulent activity or any other action that may be necessary.

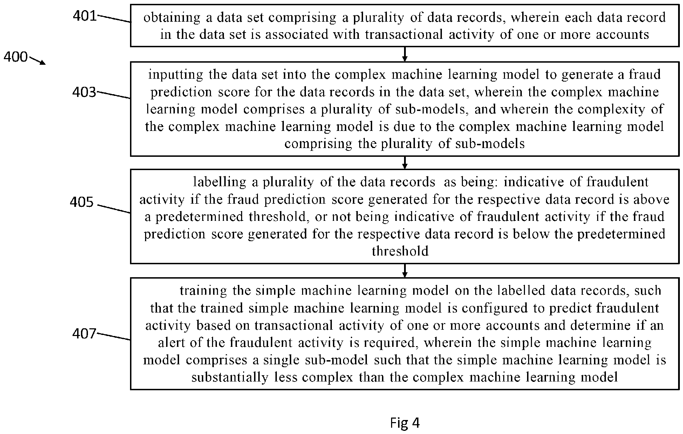

Figure 4 shows a flow diagram of a computer implemented method for training a simple machine learning model to predict fraud, according to an aspect of the present invention.

At step 401 the method involves, obtaining a data set comprising a plurality of data records, wherein each data record in the data set is associated with transactional activity of one or more accounts.

At step 403 the method involves, inputting the data set into the complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models.

At step 405 the method involves, labelling a plurality of the data records as being: indicative of fraudulent activity if the fraud prediction score generated for the respective data record is above a predetermined threshold, or not being indicative of fraudulent activity if the fraud prediction score generated for the respective data record is below the predetermined threshold.

At step 407 the method involves, training the simple machine learning model on the labelled data records, such that the trained simple machine learning model is configured to predict fraudulent activity based on the transactional activity of one or more accounts and determine if an alert of the fraudulent activity is required, wherein the simple machine learning model comprises a single sub-model such that the simple machine learning model is substantially less complex than the complex machine learning model.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

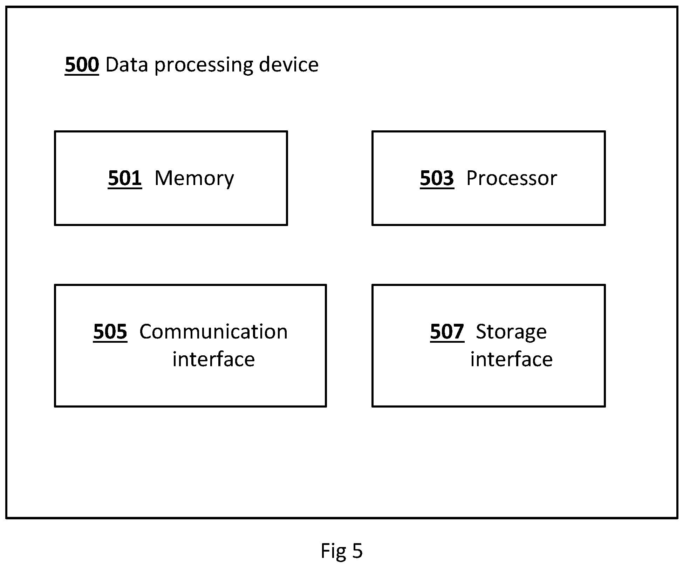

Similarly, any steps of any of the methods described herein may be performed by data processing devices. By way of example, Figure 5 shows, in schematic form, a data processing device 500 that is suitable for performing the functions of the payment network provider server and the one or more user servers, or any of the modules therein. The data processing device 500 may automatically perform any of the methods described herein.

Data processing device 500 includes a processor 503 for executing instructions. Instructions may be stored in a memory 501. Processor 503 may include one or more processing units (e.g., in a multi-core configuration) for executing instructions. The instructions may be executed within a variety of different operating systems on the data processing device 500, such as UNIX, LINUX, Microsoft Windows^{®}, etc. More specifically, the instructions may cause various data manipulations on data stored in memory 501 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 503 is operatively coupled to a communication interface 505 such that data processing device 500 can communicate with a remote device, such as another data processing device of the system. For example, communication interface 505 may receive communications from another member of the system.

Processor 503 may also be communicatively coupled to a storage device such as a database, depending on the function of data processing device 500 within the context of the system. The storage device is any computer-operated hardware suitable for storing and/or retrieving data, where in the case of a secure storage medium the data is stored and retrieved securely.

The storage database may, for example, store the data set 120, the further data record, the complex machine learning mode 110 and the simple machine learning model 210, and it can be external to data processing device 500 and located remotely. Alternatively, it can be integrated in data processing device 500. For example, data processing device 500 may include memory 501 as one or more hard disk drives acting as a storage database. Alternatively, where the storage database is external to data processing device 500, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 503 can be operatively coupled to the storage device (storage database) via a storage interface 507. Storage interface 507 is any component capable of providing processor 503 with access to the storage device. Storage interface 507 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 503 with access to the storage device.

Memory 501 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

As described in relation to Figure 1, the plurality of sub-models 113, 115 of the complex machine learning model 110 are associated with different aspects of the payment network. However, in some arrangements the plurality of sub-models 113, 115 of the complex machine learning model 110 may be associated with the same aspect of the payment network.

Although it is described that the first sub-model 113 is an unsupervised machine learning model and that the second sub-model 115 is a supervised machine learning model of the complex machine learning model 110, in some arrangements, the first sub-model 113 may be a supervised machine learning model and the second sub-model 115 may be an unsupervised machine learning model. The complex machine learning model 110 may also consist of additional sub-models to those shown in Figure 1 and the additional sub-models may be either supervised or unsupervised models.

Alternatively, the first and second sub-models 113, 115 may be of the same model type, for instance both are supervised or both are unsupervised models. In this instance, the outputs generated by each of the plurality of sub-models 113, 115 will be the same type of output. Therefore, the complexity of the complex machine learning model 110, if it comprised of a plurality of sub-models 113, 115 of the same model type, will be due to the fact the complex machine learning model 110 includes this plurality of sub-models 113, 115, rather than the added complexity of the different model types and combining of the different output types (as discussed in relation to Figure 1 where the complex machine learning model 110 comprises a plurality of sub-models of different model types). The combination of the outputs from sub-models 113, 115 of the same model type may not be as complex as the combining of the different types of output from the sub-models 113, 115 of different model types, but this extra step of combining the outputs still adds a complexity to the complex machine learning model 110 over the single output of simple machine learning model 210.

As previously described, each data record 125 in the data set 120 is input into each of the plurality of sub-models 113, 115 in the complex machine learning model 110.

However, in other arrangements, it may be a sub-set of the data features 121 within each data record 125 that are input into one of the plurality of sub-models 113, 115, and a different sub-set of the data features 121 within each data record 125 are input into another of the plurality of sub-models 113, 115. In this way, different features 121 of the data records 125 relating to transactional activity may be input into different sub-models of the plurality of sub-models 113, 115. Each of the plurality of sub-models 113, 115 may therefore generate an output based on different data features 121 within a data record 125, that can then be combined by the mixer 130 to generate a fraud prediction score 140 for that data record 125.

As previously described, the predetermined threshold applied to the fraud prediction score 140 of the complex machine learning model 110 shown in Figure 1 determines whether each data record 125 in the data set 120 is indicative of fraudulent activity or not. A fraud prediction score 140 above the predetermined threshold indicates that the data record 125 is likely to be associated with fraudulent activity, whereas a fraud prediction score 140 below the predetermined threshold indicates that the data record 125 is likely to not be associated with fraudulent activity. Alternatively, depending on what the fraud prediction score 140 represents (e.g., a low score is fraudulent and a high score is not fraudulent) and depending on the threshold set, the data record 125 could be labelled as fraudulent if it is below the predetermined threshold and labelled as not fraudulent if it is above the predetermined threshold.

Furthermore, it is shown in Figure 1 that the labelling of the data records 125 based on the fraud prediction score 140 is not performed within the complex machine learning model 110 (but by the system 100 of the payment network provider). However, it is to be understood that the labelling of each of the plurality of data records 125 as being indicative of fraudulent activity 150 or not indicative of fraudulent activity 160 may be performed by the complex machine learning model 110 itself.

Although it is described that the single sub-model of the simple machine learning model 210 is a random forest algorithm, in some arrangements, the single sub-model of the simple machine learning model 210 may instead be a linear regression algorithm. Alternatively, or in addition it may be XGBoost or any other type of machine learning model.

Furthermore, the updating of the trained simple machine learning 210 model may comprise re-training the trained simple machine learning model 210. The re-training may include inputting the one or more additional data records obtained from the user into the trained simple machine learning model 210. The one or more additional data records may be labelled as being indicative of fraudulent activity, such that the simple machine learning model 210 is then further trained to predict similar transactional activity to the transactional activity of the one or more additional data records as being indicative of fraudulent activity.

As described above in relation Figure 3, the further data record 330 is obtained from the payment network provider 310, however, it may also be obtained from elsewhere, for example the user 390 of the payment network provider, or any other user such as a financial institution or merchant. Furthermore, the input 320 is not limited to the further data record 330 shown in Figure 3, the input 320 may be a plurality of further data records obtained by the payment network provider 310, or elsewhere.

## Claims

1. A computer implemented method for training a simple machine learning model to predict fraud, the method comprising:
obtaining a data set comprising a plurality of data records, wherein each data record in the data set is associated with transactional activity of one or more accounts;
inputting the data set into a complex machine learning model to generate a fraud prediction score for the data records in the data set, wherein the complex machine learning model comprises a plurality of sub-models, and wherein the complexity of the complex machine learning model is due to the complex machine learning model comprising the plurality of sub-models;
labelling a plurality of the data records in the data set as being: indicative of fraudulent activity if the fraud prediction score generated for the respective data record is above a predetermined threshold, or not being indicative of fraudulent activity if the fraud prediction score generated for the respective data record is below the predetermined threshold; and
training the simple machine learning model on the labelled data records, such that the trained simple machine learning model is configured to predict fraudulent activity based on the transactional activity of one or more accounts and determine if an alert of the predicted fraudulent activity is required, wherein the simple machine learning model comprises a single sub-model such that the simple machine learning model is substantially less complex than the complex machine learning model.

2. The computer implemented method of claim 1, wherein the training of the simple machine learning model further comprises validating the trained simple machine learning model, wherein the validating comprises:
generating an output of the trained simple machine learning model using a validation data set;
generating an output of the complex machine learning model using the validation data set;
determining a performance of the trained simple machine learning model by comparing the output of the trained simple machine learning model to the output of the complex machine learning model; and
if from said comparing it is determined that the output of the trained simple machine learning model is not within a desired range of the output of the complex machine learning model, the method further comprising:
re-training the simple machine learning model with additional data records until the output of the trained simple machine learning model is within the desired range from the output of the complex machine learning model.

3. The computer implemented method of any preceding claim, further comprising:
receiving a further data record associated with transactional activity of one or more accounts;
inputting the further data record into the trained simple machine learning model so as determine if the further data record is indicative of fraudulent activity.

4. The computer implemented method of claim 3, wherein inputting the further data record into the trained simple machine learning model so as determine if the further data record is indicative of fraudulent activity further comprises:
inputting the further data record into the trained simple machine learning model to determine a fraud prediction score associated with the further data record;
determining that the further data record is indicative of fraudulent activity if the fraud prediction score associated with the further data record is above the predetermined threshold.

5. The computer implemented method of claim 4, further comprising:
alerting a user that the data record is indicative of fraudulent activity if the fraud prediction score associated with the further data record is above the predetermined threshold.

6. The computer implemented method of any of claims 3 to 5, wherein each of the plurality of data records and the further data record comprise a plurality of data features, and wherein each of the plurality of data records and the further data record comprise one or more of the same data features.

7. The computer implemented method of any preceding claim, wherein the plurality of sub-models of the complex machine learning model comprises a first sub-model of a first model type and a second sub-model of a second model type, wherein the first model type and second model type are different.

8. The computer implemented method of any preceding claim, wherein the first model type is an unsupervised machine learning model and the second model type is a supervised machine learning model.

9. The computer implemented method of any preceding claim, wherein the complex machine learning model generates the fraud prediction score through combining of a plurality of outputs from each of the plurality of sub-models that form the complex machine learning model.

10. The computer implemented method of any preceding claim, wherein the single sub-model of the simple machine learning model is a supervised model.

11. The computer implemented method of claim 10, wherein the supervised learning model of the simple machine learning model, is a random forest algorithm.

12. The computer implemented of claim 11, wherein a number of trees and a depth of the number of trees of the random forest algorithm are limited.

13. The computer implemented method of any preceding claim, further comprising:
obtaining a data record from a user, wherein the data record from the user was determined by the user to be indicative of fraudulent activity;
generating an output using the data record from the user as input into the trained simple machine learning model; and
updating the trained simple machine learning model such that from the output generated by the data record from the user it is determined that said the data record is indicative of fraudulent activity.

14. A system for training a simple machine learning model to predict fraud, the system configured to perform the method steps of any of claims 1 to 13.

15. A non-transitory computer-readable medium comprising instructions which, when executed by a computer, cause the computer to carry out the method steps of any claim 1 to 13.
